# EUROPÄISCHE PATENTANMELDUNG

(11) **EP 1 876 799 A1**
(43) Veröffentlichungstag der Anmeldung: **09.01.2008**
(21) Anmeldenummer: 06405287.1
(22) Anmeldetag: 06.07.2006
(51) Int. Cl.: H04L 29/12

(54) **Verfahren und Computersystem für den Datenaustauch mit einem Computer**

(71) Anmelder: Swisscom Solutions AG, 3050 Bern (CH)
(72) Erfinder: Zürcher, Michael, 3012 Bern (CH); Baumgartner, Florian, 3008 Bern (CH); Wäfler, Hanspeter, 6274 Eschenbach (CH); Wenger, Daniel, 3014 Bern (CH); Cueni, Christian, 3013 Bern (CH)
(74) Vertreter: Vogel, Dany

(57) **Zusammenfassung**

Zum Einrichten eines kommunikationsfähigen Computers (10) für den Datenaustausch mit internen Kommunikationsvorrichtungen (13) in einem lokalen Kommunikationsnetz (1) und mit externen Kommunikationsvorrichtungen (20) in einem externen, ausserhalb des lokalen Kommunikationsnetzes (1) angeordneten Kommunikationsnetz (2) eines Dienstanbieters, wird beispielsweise beim Aufstarten des Computers (10) automatisch eine Tunnelverbindung (12) über die Netzwerkadresse vom Computer (10) zu einem Gateway (3) erstellt, der das lokale Kommunikationsnetz (1) mit dem externen Kommunikationsnetz (2) verbindet und dem Computer (10) eine Tunnelendpunktadresse (120) aus einem dem externen Kommunikationsnetz (2) zugeordneten externen Adressbereich zuweist. Zusätzliche Computer (10) können so in das lokale Kommunikationsnetz (1) eingefügt werden, dass ihre Adresse netzübergreifend, d.h. für mehrere unabhängige lokale Kommunikationsnetze (1, 1') und im externen Kommunikationsnetz (2), ein-eindeutig erkannt und zugeordnet werden können, ohne dass an der bestehenden Netzwerkumgebung im lokalen Kommunikationsnetz (1) jeweils Umstellungen vorgenommen werden müssen. Die zusätzlichen Computer (10) können vom externen Kommunikationsnetz (2) aus identifiziert, adressiert, sowie direkt und effizient gewartet und mit Ressourcen (21) sowie Diensten versorgt werden.

## Beschreibung

### Technisches Gebiet

Die vorliegende Erfindung betrifft ein Verfahren und ein Computersystem für den Datenaustausch mit einem Computer. Die vorliegende Erfindung betrifft insbesondere ein Verfahren zum Einrichten eines kommunikationsfähigen Computers für den Datenaustausch mit internen Kommunikationsvorrichtungen in einem lokalen Kommunikationsnetz und mit externen Kommunikationsvorrichtungen in einem externen, ausserhalb des lokalen Kommunikationsnetzes angeordneten Kommunikationsnetz eines Dienstanbieters, sowie ein Computersystem für die Durchführung dieses Datenaustauschs.

### Stand der Technik

Heutzutage verwenden kleinere und mittlere Unternehmen mit beispielsweise 25 bis 500 Mitarbeitern über lokale Kommunikationsnetze zur Vernetzung mehrerer verschiedener Kommunikationsvorrichtungen wie Personal Computer, Drucker, Scanner, File Server, Applikations Server, Datenbank Server, etc. Typischerweise sind diese lokalen Kommunikationsnetze zudem über einen Zugriffspunkt mit dem weltweiten Internet (World Wide Web) verbunden. Wenn zusätzliche Kommunikationsvorrichtungen in ein solches lokales Kommunikationsnetz eingefügt werden, die durch ein externes, ausserhalb des lokalen Kommunikationsnetzes angeordnetes Kommunikationsnetz eines Dienstanbieters gewartet und mit Ressourcen sowie Diensten versorgt werden sollen, besteht das Problem, dass Netzwerkadressen (z.B. IP Adressen) von Kommunikationsvorrichtungen im lokalen Kommunikationsnetz mit Netzwerkadressen von Kommunikationsvorrichtungen im externen Kommunikationsnetz und/oder in einem anderen lokalen Kommunikationsnetz (beispielsweise von einer anderen Firma) überlappen. Folglich können im externen Kommunikationsnetz Adressen von Kommunikationsvorrichtungen in lokalen Kommunikationsnetzen nicht ein-eindeutig zugeordnet werden, wenn in den lokalen Kommunikationsnetzen jeweils keine Umstellungen an der bestehenden Netzwerkumgebung vorgenommen werden. Es ist jedoch von Vorteil, wenn Umstellungen an bestehenden Netzwerkumgebung vermieden werden können, da sie mit beträchtlichem Verwaltungs- und Konfigurationsaufwand verbunden sind und oft Betriebsunterbrüche verursachen.

In der Patentanmeldung US 2003/0145104 wird ein Gateway für mehrere überlappende Subnetze beschrieben, welcher einen Adressenpool verwendet, um einzelnen Verbindungen zum Gateway intern weiterleitbare, eindeutige IP Adressen zuzuweisen. Nach US 2003/0145104 werden die Adressen den IP Adressen empfangener IP Pakete zugeordnet.

### Darstellung der Erfindung

Es ist eine Aufgabe der vorliegenden Erfindung ein Verfahren zum Einrichten eines kommunikationsfähigen Computers für den Datenaustausch mit internen Kommunikationsvorrichtungen in einem lokalen Kommunikationsnetz und mit externen Kommunikationsvorrichtungen in einem externen, ausserhalb des lokalen Kommunikationsnetzes angeordneten Kommunikationsnetz eines Dienstanbieters, sowie ein Computersystem für die Durchführung dieses Datenaustauschs vorzuschlagen, welches Verfahren und welches Computersystem ermöglichen die Nachteile des Stands der Technik zu vermeiden. Insbesondere sollen das Verfahren und das Computersystem ermöglichen, dass zusätzliche Kommunikationsvorrichtungen in das lokale Kommunikationsnetz eingefügt und durch das externe Kommunikationsnetz gewartet und mit Ressourcen sowie Diensten versorgt werden können, ohne dass an der bestehenden Netzwerkumgebung des lokalen Kommunikationsnetzes jeweils signifikante Umstellungen vorgenommen werden müssen.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Die oben genannten Ziele werden durch die vorliegende Erfindung insbesondere dadurch erreicht, dass beim Einrichten eines kommunikationsfähigen Computers für den Datenaustausch mit internen Kommunikationsvorrichtungen in einem lokalen Kommunikationsnetz und mit externen Kommunikationsvorrichtungen in einem externen, ausserhalb des lokalen Kommunikationsnetzes angeordneten Kommunikationsnetz eines Dienstanbieters, der Computer mit dem lokalen Kommunikationsnetz verbunden wird, dass vom lokalen Kommunikationsnetz eine Netzwerkadresse an den Computer zugewiesen wird, dass vom Computer eine Tunnelverbindung über die Netzwerkadresse zu einem Gateway, der das lokale Kommunikationsnetz mit dem externen Kommunikationsnetz verbindet, erstellt wird, dass durch den Gateway eine Tunnelendpunktadresse an den Computer zugewiesen wird, und dass der Datenaustausch zwischen dem Computer und den internen sowie externen Kommunikationsvorrichtungen durch die Tunnelverbindung und über den Gateway ausgeführt wird, wobei an den Computer gerichtete Datenpakete an die Tunnelendpunktadresse adressiert werden. Der Gateway leitet Datenpakete vom Computer, die an eine Netzwerkadresse aus einem dem lokalen Kommunikationsnetz zugeordneten internen Adressbereich adressiert sind, an die internen Kommunikationsvorrichtungen weiter. Zudem leitet der Gateway vorzugsweise Datenpakete, die an eine Netzwerkadresse aus einem für Kundencomputer vorgesehenen Unterbereich des externen Adressbereichs adressiert sind, über eine der letztgenannten Netzwerkadresse zugeordnete Tunnelverbindung weiter, und leitet Datenpakete, die an eine Netzwerkadresse aus dem übrigen externen Adressbereich adressiert sind, über das externe Kommunikationsnetz an die externen Kommunikationsvorrichtungen weiter. Es soll darauf hingewiesen werden, dass der Begriff Tunnel respektive Tunnelverbindung oder Kommunikationstunnel Bezug nimmt auf die Übertragung von Daten eines ersten Netzwerkprotokolls, beispielsweise IP (Internet Protocol) eingebettet in ein anderes zweites Netzwerkprotokoll, gemäss einem Tunneling Protokoll. Überdies soll der Begriff Gateway (ein auf einem Computer ausgeführtes programmiertes Gateway-Modul oder eine Gateway-Vorrichtung) nicht ausschliesslich im strengen Sinne verstanden werden, welcher eine mögliche Protokollumsetzung auf sämtlichen Protokollschichten des OSI-Referenzmodells (Open Systems Interconnection) vorsieht, sondern auch im Sinne eines mit zusätzlichen Funktionen erweiterten Routers. Die automatische Erstellung eines Tunnels vom Computer zum Gateway und die Ausführung des Datenaustauschs zwischen dem Computer und den internen sowie externen Kommunikationsvorrichtungen durch den Tunnel und über den Gateway ermöglicht zusätzliche Computer (Kommunikationsvorrichtungen) so in das lokale Kommunikationsnetz einzufügen, dass ihre Adresse im externen Kommunikationsnetz ein-eindeutig erkannt und zugeordnet werden können, so dass die zusätzlichen Computer vom externen Kommunikationsnetz aus identifiziert, adressiert, gewartet und mit Ressourcen sowie Diensten versorgt werden können, ohne dass an der bestehenden Netzwerkumgebung im lokalen Kommunikationsnetz jeweils Umstellungen vorgenommen werden müssen. Umgekehrt können Ressourcen und Dienste der zusätzlichen Computer auch vom externen Kommunikationsnetz aus respektive von einem entfernten Computer via das externe Kommunikationsnetz genutzt werden. Allfällige minimale Anpassungen sind typischerweise einmalig, beispielsweise dass im DNS (Domain Name System) des internen Kommunikationsnetzes DNS vom externen Kommunikationsnetz eingetragen werden, und wären auch erforderlich, wenn im lokalen Kommunikationsnetz beispielsweise ein neuer Standort mit entsprechendem Kommunikationsnetz hinzugefügt wird.

Vorzugsweise wird die Tunnelendpunktadresse aus einem dem externen Kommunikationsnetz zugeordneten externen Adressbereich gewählt. Durch die Verwendung des externen Adressbereichs für die Zuordnung von Netzwerkadressen an die in lokalen Kommunikationsnetzen angeordneten Kundencomputer kann eine ein-eindeutige Adresszuordnung netzübergreifend, d.h. für mehrere unabhängige lokale Kommunikationsnetze, erreicht werden.

In einer Ausführungsvariante wird die Tunnelendpunktadresse aus einem dem lokalen Kommunikationsnetz zugeordneten, für Kundencomputer vorgesehenen Unterbereich des externen Adressbereichs gewählt. Durch die Zuordnung unterschiedlicher Adressunterbereiche für verschiedene lokale Kommunikationsnetze und/oder verschiedene lokale Kommunikationsnetze verschiedener Kunden wird im externen Kommunikationsnetz eine einfache Zuordnung von Kundencomputern zu Kommunikationsnetzen und/oder Kunden ermöglicht.

In einer Ausführungsvariante wird die Tunnelendpunktadresse aus einem dem lokalen Kommunikationsnetz zugeordneten, für lokale Kundencomputer vorgesehenen ersten Unterbereich des externen Adressbereichs oder aus einem dem lokalen Kommunikationsnetz zugeordneten, für entfernte Kundencomputer vorgesehenen zweiten Unterbereich des externen Adressbereichs gewählt, abhängig davon, ob der Computer sich mit dem lokalen Kommunikationsnetz oder über einen externen Zugriffspunkt mit dem externen Kommunikationsnetz verbindet.

In einer Ausführungsvariante wird der Computer vor dem Erstellen der Tunnelverbindung authentifiziert. Durch die Authentifizierung der Computer vor der Erstellung der Tunnelverbindung wird verhindert, dass sich Computer unbefugt über den Gateway an das externe Kommunikationsnetz anbinden, das externe Kommunikationsnetz wird geschützt, die Sicherheit vom internen Kommunikationsnetz und von darin angeordneten Kommunikationseinheiten wird erhöht und administrative Aufgaben wie Kostenabrechnung und Autorisierung können durchgeführt werden.

In einer Ausführungsvariante verbindet der Gateway das lokale Kommunikationsnetz über eine Teilnehmerleitung mit dem externen Kommunikationsnetz.

Neben dem Verfahren zum Einrichten des kommunikationsfähigen Computers und dem Computersystem für die Durchführung des Datenaustauschs des Computers mit den internen Kommunikationsvorrichtungen im lokalen Kommunikationsnetz und mit den externen Kommunikationsvorrichtungen im externen Kommunikationsnetz, bezieht sich die vorliegende Erfindung zudem auf ein Computerprogrammprodukt mit Computerprogrammcodemitteln zur Steuerung eines oder mehrerer Prozessoren des Computersystems derart, dass das Computersystem das Einrichten des kommunikationsfähigen Computers ermöglicht und den Datenaustausch ausführt; insbesondere ein Computerprogrammprodukt mit einem computerlesbaren Medium und darin enthaltenen Computerprogrammcodemitteln.

### Kurze Beschreibung der Zeichnungen

Nachfolgend wird eine Ausführung der vorliegenden Erfindung anhand eines Beispieles beschrieben. Das Beispiel der Ausführung wird durch die folgenden beigelegten Figuren illustriert:

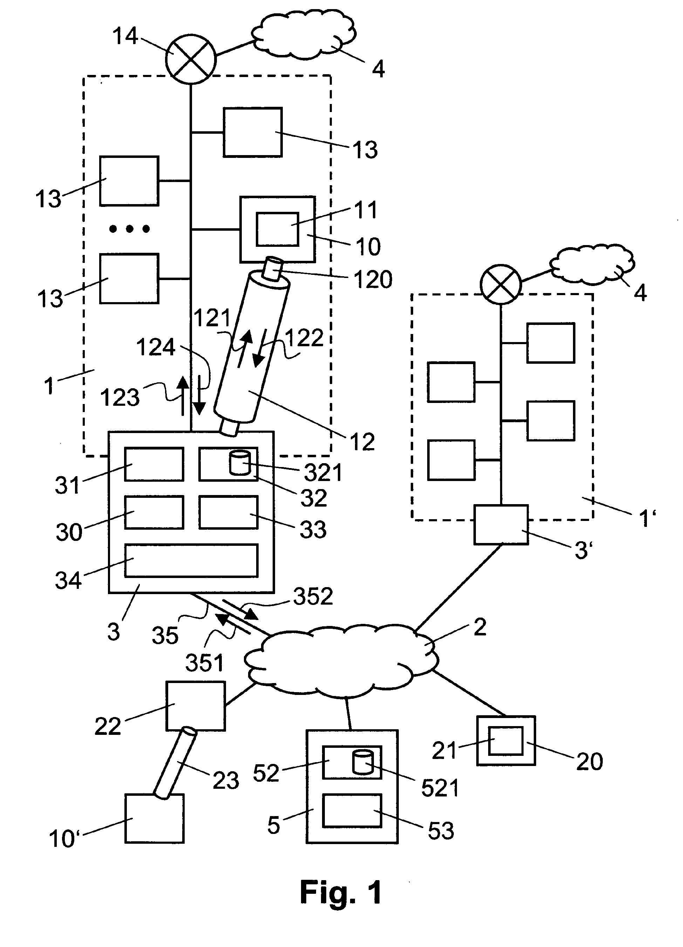

Figur 1 zeigt ein Blockdiagramm, welches schematisch ein Computersystem darstellt, das mit einem lokalen Kommunikationsnetz verbunden ist und den Datenaustausch zwischen einem Computer im lokalen Kommunikationsnetz und Kommunikationsvorrichtungen in einem externen, ausserhalb des lokalen Kommunikationsnetzes angeordneten Kommunikationsnetz eines Dienstanbieters ermöglicht.

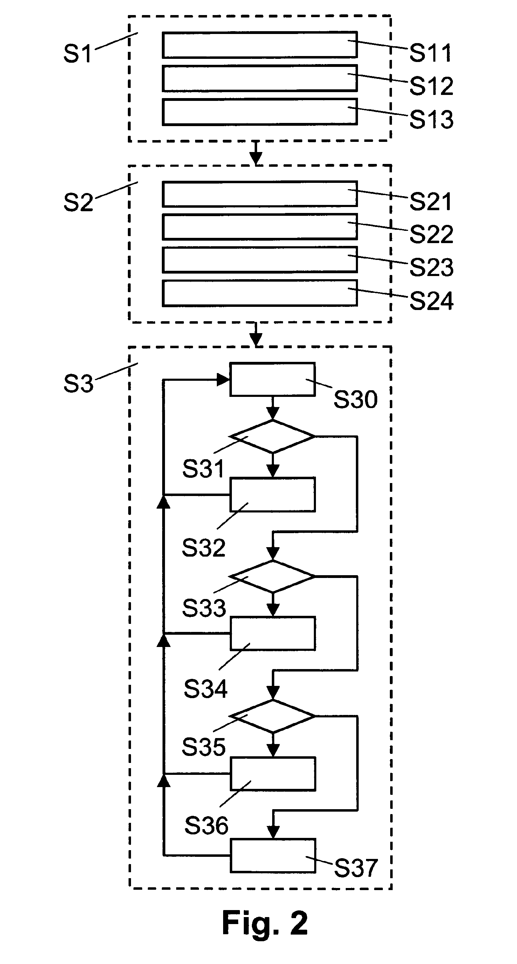

Figur 2 zeigt ein Flussdiagramm, das schematisch ein Beispiel einer Sequenz von Schritten zum Einrichten eines kommunikationsfähigen Computers im lokalen Kommunikationsnetz für den Datenaustausch mit Kommunikationsvorrichtungen im externen Kommunikationsnetz darstellt.

### Wege zur Ausführung der Erfindung

In der Figur 1 bezeichnet das Bezugszeichen 1 ein lokales Kommunikationsnetz eines Kunden, z.B. ein LAN (Local Area Network) basierend auf Ethernet und IP. Das lokale Kommunikationsnetz 1 umfasst mehrere Kommunikationsvorrichtungen 13, zum Beispiel zehn, hundert oder mehrere Hundert, beispielsweise Personal Computer, Drucker, Scanner, File Server, Applikations Server, Datenbank Server, etc. Das lokale Kommunikationsnetz 1 umfasst typischerweise auch einen Zugriffspunkt 14 für den Zugang auf das Internet 4 des World Wide Web, sowie einen Gateway 3 zur Verbindung des lokalen Kommunikationsnetzes 1 mit dem externen Kommunikationsnetz 2 eines Dienstanbieters. Die Verbindung erfolgt beispielsweise mittels eines Kommunikationsmoduls 34 über eine Teilnehmerleitung 35, insbesondere eine DSL-Teilnehmerleitung (Digital Subscriber Line). In einer Ausführungsvariante ist das Kommunikationsmodul 34 eingerichtet, die Verbindung zum externen Kommunikationsnetz 2 über den Zugriffspunkt 14 und das Internet 4 zu erstellen, wenn die Teilnehmerleitung 35 nicht oder nur beschränkt verfügbar ist. Vorzugsweise wird die Kommunikation über den Zugriffspunkt 14 und das Internet 4 geschützt, beispielsweise durch Verschlüsselung, Authentisierung und/oder Autorisierung. Das lokale Kommunikationsnetz 1 umfasst insbesondere auch einen kommunikationsfähigen Computer 10, der, wie nachfolgend detaillierter beschrieben, so im lokalen Kommunikationsnetz 1 als Kommunikationsvorrichtung eingerichtet ist, dass er mit den Kommunikationsvorrichtungen 13 im lokalen Kommunikationsnetz 1 und mit Kommunikationsvorrichtungen 20 im externen Kommunikationsnetz 2 kommunizieren kann, vom externen Kommunikationsnetz 2 aus identifiziert (beispielsweise auch für Kostenverrechnungszwecke), adressiert und gewartet werden kann, und vom externen Kommunikationsnetz 2 Ressourcen 21 und Dienste beziehen kann, beispielsweise Applikationsaktualisierungen, Konfigurationsdateien, etc. Der kommunikationsfähige Computer 10 kann über den Gateway 3 und das externe Kommunikationsnetz 2 auch Verbindungen zum Internet 4 erstellen. Umgekehrt können Kommunikationsvorrichtungen 20 auch Ressourcen und Dienste vom kommunikationsfähigen Computer 10 beziehen und nutzen (z.B. Remote Desktop). Der Fachmann wird verstehen, dass im lokalen Kommunikationsnetz 1 mehrere zusätzliche kommunikationsfähige Computer 10 eingerichtet werden können.

In der Figur 1 bezeichnet das Bezugszeichen 1' ein weiteres lokales Kommunikationsnetz, das im wesentlichen dem lokalen Kommunikationsnetz 1 entspricht und über einen dem Gateway 3 entsprechenden Gateway 3' mit dem externen Kommunikationsnetz 2 verbunden ist. Die lokalen Kommunikationsnetze 1 und 1' sind beispielsweise dem gleichen oder verschiedenen Kunden zugehörig.

Wie in der Figur 1 dargestellt ist, sind auch ein Adresszuweisungsmodul 32, 52 und eine (optionale) Authentifizierungseinheit 33, 53 mit dem externen Kommunikationsnetz 2 verbunden respektive verbindbar. Das Adresszuweisungsmodul 32, 52 und die Authentifizierungseinheit 33, 53 sind mit dem Gateway 3 auf einem gemeinsamen Computer und/oder auf einem separaten Computer eines zentralisierten Kontrollservers 5 vorzugsweise als programmierte Softwaremodule implementiert. Das Adresszuweisungsmodul 32, 52 umfasst vorzugsweise auch einen Adressdatenspeicher 321, 521, welcher als Datenbank oder Datenfile ausgeführt ist. Das Adresszuweisungsmodul 52 und der Adressdatenspeicher 521 sind beispielsweise als zentralisierte Adresszuweisungseinheit ausgeführt. In einer alternativen Ausführungsvariante sind Adresszuweisungsmodule 32 und Adressdatenspeicher 321 auf den Computern der Gateways 3, 3' als verteilte Applikationen respektive Datenbanken ausgeführt. In einer weiteren Variante sind Adresszuweisungsmodule 32 verteilt auf den Computern der Gateways 3, 3' ausgeführt und greifen auf einen zentralisierten Adressdatenspeicher 521 zu. In entsprechender Weise ist die Authentifizierungseinheit 33 respektive 53 als verteilte oder zentralisierte Applikation ausgeführt. Abhängig von diesen Ausführungsvarianten umfasst das für die Ausführung des Verfahrens verwendete Computersystem einen (oder mehrere) Computer für die Ausführung des Gateways 3 mit Verbindungsmodul 30, Wegleitungsmodul 31, Adresszuweisungsmodul 32, Authentifizierungseinheit 33 und Kommunikationsmodul 34; oder separate Computer für die Ausführung des Gateways 3 mit Verbindungsmodul 30, Wegleitungsmodul 31 und Kommunikationsmodul 34, und für die Ausführung des Kontrollservers 5 mit dem Adresszuweisungsmodul 52 und der Authentifizierungseinheit 53.

Der Gateway 3 umfasst zudem ein Verbindungsmodul 30 sowie ein Wegleitungsmodul 31, welche vorzugsweise als programmierte Softwaremodule ausgeführt sind. Der Gateway 3 umfasst vorzugsweise auch ein nicht dargestelltes Verwaltungsmodul für die Fernverwaltung, z.B. über das externe Kommunikationsnetz 2.

In den folgenden Abschnitten wird mit Bezug auf die Figur 2 eine mögliche Sequenz von Schritten beim Einrichten des kommunikationsfähigen Computers 10 im lokalen Kommunikationsnetz 1 für den Datenaustausch mit Kommunikationsvorrichtungen 20 im externen Kommunikationsnetz 2 beschrieben. In der Figur 2 bezeichnen das Bezugszeichen S1 eine Gruppe von vorbereitenden Schritten, das Bezugszeichen S2 eine Gruppe von Schritten für die Erstellung einer Tunnelverbindung zwischen dem kommunikationsfähigen Computer 10 und dem Gateway 3, und das Bezugszeichen S3 Schritte für den Datenaustausch mit dem kommunikationsfähigen Computer 10.

Im Schritt S11 wird ein vorzugsweise als programmiertes Softwaremodul ausgeführtes Tunnelinitiierungsmodul 11 in den kommunikationsfähigen (Kunden-) Computer 10 geladen.

Im Schritt S12 wird der kommunikationsfähige Computer 10 kontaktbasierend oder drahtlos, beispielsweise über ein WLAN (Wireless Local Area Network, z.B. WiFi), mit dem lokalen Kommunikationsnetz 1 verbunden.

Im Schritt S13 wird dem kommunikationsfähigen Computer 10 vom lokalen Kommunikationsnetz 1 eine Netzwerkadresse zugewiesen, beispielsweise gemäss DHCP (Dynamic Host Configuration Protocol), zum Beispiel die IP Adresse 10.17.2.23 aus einem dem lokalen Kommunikationsnetz 1 zugeordneten internen Adressbereich 10.17.2.x.

Der Fachmann wird verstehen, dass Schritt S11 auch erst nach den Schritten S12 respektive S13 ausgeführt werden kann.

Im Schritt S21 sendet das Tunneliniierungsmodul 11 des kommunikationsfähigen Computers 10 eine Tunnelinitiierungsanfrage an den Gateway 3, beispielsweise gemäss L2TP (Layer 2 Tunneling Protocol), MIP (Mobile IP), PPTP (Point-to-Point Tunneling Protocol), IPSec (IP Security), PPP (Point-to-Point Protocol), oder einem anderen Tunneling Protokoll. Die Tunnelinitiierungsanfrage wird vorzugsweise automatisch nach vordefinierten Regeln ausgeführt, beispielsweise beim Aufstarten (beim Booten) des kommunikationsfähigen Computers 10, beim Einloggen des Benutzers oder beim Eintreten anderer definierter Ereignisse. Die Tunnelinitiierungsanfrage kann alternativ auch "manuell", d.h. auf Benutzerbefehl erfolgen.

Im Schritt S22 wird der kommunikationsfähige Computer 10 durch die Authentifizierungseinheit 33, 53 authentifiziert, beispielsweise auf der Basis von digitalen Zertifikaten, die vom kommunikationsfähigen Computer 10 zusammen mit der Tunnelinitiierungsanfrage oder als Antwort auf eine diesbezügliche Anfrage der Authentifizierungseinheit 33, 53 an den Gateway 3 übermittelt wird.

Bei erfolgreicher Authentifizierung erstellt das Verbindungsmodul 30 im Schritt S23 eine Tunnelverbindung 12 zum kommunikationsfähigen Computer 10. Die Tunnelverbindung 12 ist beispielsweise ein L2TP Tunnel, wobei im lokalen Kommunikationsnetz 1 keine kryptographische Verschlüsselung notwendig ist, jedoch, falls erforderlich, auch realisiert werden kann.

Im Schritt S24 bestimmt das Adresszuweisungsmodul 32, 52 eine Tunnelendpunktadresse 120 und weist sie dem kommunikationsfähigen Computer 10 für die Tunnelverbindung 12 zu. Die Tunnelendpunktadresse 120, z.B. 10.17.1.10, wird vorzugsweise aus einem dem externen Kommunikationsnetz zugeordneten externen Adressbereich gewählt, z.B. 10.17.1.0 bis 10.17.1.x. Die Tunnelendpunktadresse wird überdies vorzugsweise aus einem dem lokalen Kommunikationsnetz 1 zugeordneten Unterbereich des externen Adressbereichs gewählt, z.B. 10.17.1.0 bis 10.17.1.24. Der Adressbereichsunterbereich eines Klienten ist in einer Variante weiter unterteilt in einen Unterbereich, z.B. z.B. 10.17.1.0 bis 10.17.1.16, für lokale kommunikationsfähige Computer 10 im lokalen Kommunikationsnetz 1 und einen weiteren Unterbereich, z.B. z.B. 10.17.1.17 bis 10.17.1.24, für entfernte, beispielsweise mobile kommunikationsfähige Computer 10' des Klienten die von ausserhalb des lokalen Kommunikationsnetzes 1 über einen externen, beispielsweise zentralisierten Zugriffspunkt 22, z.B. ein RAS (Remote Access Server), auf das externe Kommunikationsnetz 2 respektive das lokale Kommunikationsnetz 1 zugreifen. Der Zugriff auf den Zugriffspunkt 22 erfolgt beispielsweise gesichert (verschlüsselt) über eine VPN Tunnelverbindung 23 (Virtual Private Network), wobei dem entfernten Computer 10' durch das Adresszuweisungsmodul 52 eine Tunnelendpunktadresse aus dem genannten Unterbereich für entfernte Computer 10' des Klienten zugewiesen wird. Die verschiedenen Adressbereiche respektive Adressunterbereiche und deren Zuordnung zu verschiedenen lokalen Kommunikationsnetzen und/oder Klienten sind im Adressdatenspeicher 321, 521 gespeichert. Tabelle 1 zeigt ein Beispiel einer im Adressdatenspeicher 321, 521 gespeicherten Bereichs- respektive Adresszuordnung für mehrere Kunden A bis Z und deren lokale Kommunikationsnetze A1, Z1, Z2, Z3.

**Tabelle 1**

| Zuordnung der Adressbereiche | | |
|---|---|---|
| Kundenidentifizierung | Identifizierung des Kommunikationsnetzes respektive der Kommunikationseinheiten | Adressbereich respektive Netzwerkadresse |
| Kunde A | Lokales Kommunikationsnetz A1 | 10.17.1.0 bis 10.17.1.16 |
| Kunde A | Entfernte mobile Kommunikationseinheiten | 10.17.1.17 bis 10.17.1.24 |
| ... | ... | ... |
| Kunde Z | Lokales Kommunikationsnetz Z1 | 10.17.1.40 bis 10.17.1.56 |
| Kunde Z | Lokales Kommunikationsnetz Z2 | 10.17.1.57 bis 10.17.1.72 |
| Kunde Z | Lokales Kommunikationsnetz Z3 | 10.17.1.73 |
| | | 10.17.1.76 |
| | | 10.17.1.77 |
| | | 10.17.1.80 |
| Kunde Z | Entfernte mobile Kommunikationseinheiten | 10.17.1.82 |
| | | 10.17.1.84 |
| | | 10.17.1.96 |

Im Schritt S30 untersucht das Wegleitungsmodul 31 Daten, die über das lokale Kommunikationsnetz 1 oder das externe Kommunikationsnetz 2 im Gateway 3 empfangen wurden.

Wenn das Wegleitungsmodul 31 im Schritt S31 bestimmt, dass die Daten, wie durch Pfeil 351 angedeutet, über das externe Kommunikationsnetz 2 entgegengenommen wurden und an eine Netzwerkadresse aus dem externen Adressbereich gerichtet sind, leitet das Wegleitungsmodul 31 die Daten im Schritt S32, wie durch Pfeil 121 angedeutet, über die Tunnelverbindung 12 mit der entsprechenden Tunnelendpunktadresse 120 an die betreffende Kommunikationseinheit (Computer 10) weiter.

Wenn das Wegleitungsmodul 31 im Schritt S33 bestimmt, dass die Daten, wie durch Pfeil 122 angedeutet, über die Tunnelverbindung 12 vom kommunikationsfähigen Computer 10 entgegengenommen wurden und an eine Netzwerkadresse aus dem internen Adressbereich gerichtet sind, leitet das Wegleitungsmodul 31 die Daten im Schritt S34, wie durch Pfeil 123 angedeutet, über das lokale Kommunikationsnetz 1 direkt an die betreffende Kommunikationseinheit 13 weiter.

Wenn das Wegleitungsmodul 31 im Schritt S35 bestimmt, dass die Daten, wie durch die Pfeile 122 und 124 angedeutet, über das lokale Kommunikationsnetz 1 entgegengenommen wurden (über eine Tunnelverbindung 12 oder direkt) und an eine Netzwerkadresse aus einem dem lokalen Kommunikationsnetz 1 zugeordneten Unterbereich des externen Adressbereichs gerichtet sind, leitet das Wegleitungsmodul 31 die Daten im Schritt S36, wie durch Pfeil 121 angedeutet, über die Tunnelverbindung 12 mit der entsprechenden Tunnelendpunktadresse 120 an die betreffende Kommunikationseinheit (Computer 10) weiter.

Im Schritt S37 leitet das Wegleitungsmodul 31 die Daten, die wie durch Pfeil 122 angedeutet, über die Tunnelverbindung 12 vom kommunikationsfähigen Computer 10 entgegengenommen wurden und an eine Netzwerkadresse aus dem verbleibenden, d.h. nicht dem lokalen Kommunikationsnetz 1 zugeordneten, externen Adressbereich gerichtet sind, an die betreffende Kommunikationseinheit 20 im externen Kommunikationsnetz 2 weiter.

Der gemäss den Schritten S30 bis S37 durchgeführte Routingalgorithmus wird in einer Variante so erweitert, dass wenn im Schritt S37 die Daten, nicht an eine Netzwerkadresse aus dem verbleibenden externen Adressbereich gerichtet sind und keine der vorher überprüften Regeln/Bedingungen erfüllen, auf eine frei wählbare/konfigurierbare "default Route" geleitet werden. Die Datenpakete werden so beispielsweise entsprechend den Wünschen des Kunden oder des Dienstanbieters über den Zugriffspunkt 14 oder über das externe Kommunikationsnetz 2 ins Internet 4 geleitet, oder die Pakete werden "vernichtet".

Der Gateway 3 terminiert eine oder mehrere Tunnelverbindungen 12 von einem respektive mehreren kommunikationsfähigen Computer 10 im lokalen Kommunikationsnetz 1. Der Gateway 3 umfasst auch die Funktion eines NAT Gateways (Network Address Translation) für die anderen Kommunikationseinheiten 13 im lokalen Kommunikationsnetz 1. Die Verbindung mehrerer lokaler Kommunikationsnetze 1, 1' eines Kunden mit mehreren Firmenstandorten erfolgt beispielsweise unter Verwendung eines VPNs (z.B. basierend auf IPsec, Internet Protocol Security) über das Internet 4 oder aber mittels VPN (z.B. basierend auf MPLS, Multiprotocol Label Switching) via das externe Kommunikationsnetz 2.

Der kommunikationsfähige Computer 10 greift auf alle Ressourcen im lokalen Kommunikationsnetz 1 sowie auf Ressourcen 21 im externen Kommunikationsnetz 2 über die Tunnelverbindung 12 zu. Zudem erscheint der kommunikationsfähige Computer 10 im lokalen Kommunikationsnetz 1 vorzugsweise unter der zugeordneten Tunnelendpunktadresse 120.

## Patentansprüche

1. Verfahren zum Einrichten eines kommunikationsfähigen Computers (10) für den Datenaustausch mit internen Kommunikationsvorrichtungen (13) in einem lokalen Kommunikationsnetz (1) und mit externen Kommunikationsvorrichtungen (20) in einem externen, ausserhalb des lokalen Kommunikationsnetzes angeordneten Kommunikationsnetz (2) eines Dienstanbieters, umfassend:
Verbinden des Computers (10) mit dem lokalen Kommunikationsnetz (1),
Zuweisen einer Netzwerkadresse vom lokalen Kommunikationsnetz (1) an den Computer (10),
Erstellen einer Tunnelverbindung (12) vom Computer (10) über die Netzwerkadresse zu einem Gateway (3), der das lokale Kommunikationsnetz (1) mit dem externen Kommunikationsnetz (2) verbindet,
Zuweisen einer Tunnelendpunktadresse (120) durch den Gateway (3) an den Computer (10), und
Ausführen des Datenaustauschs zwischen dem Computer (10) und den internen sowie externen Kommunikationsvorrichtungen durch die Tunnelverbindung (12) und über den Gateway (3), wobei an den Computer (10) gerichtete Datenpakete an die Tunnelendpunktadresse (120) adressiert werden.

2. Verfahren nach Anspruch 1, **dadurch gekennzeichnet, dass** die Tunnelendpunktadresse (120) aus einem dem externen Kommunikationsnetz (2) zugeordneten externen Adressbereich gewählt wird.

3. Verfahren nach Anspruch 2, **dadurch gekennzeichnet, dass** die Tunnelendpunktadresse (120) aus einem dem lokalen Kommunikationsnetz (1) zugeordneten, für Kundencomputer vorgesehenen Unterbereich des externen Adressbereichs gewählt wird.

4. Verfahren nach Anspruch 3, **dadurch gekennzeichnet, dass** der Gateway (3) Datenpakete vom Computer (10), die an eine Netzwerkadresse aus einem dem lokalen Kommunikationsnetz (1) zugeordneten internen Adressbereich adressiert sind, an die internen Kommunikationsvorrichtungen (13) weiterleitet, dass der Gateway (3) Datenpakete, die an eine Netzwerkadresse aus dem für Kundencomputer vorgesehenen Unterbereich des externen Adressbereichs adressiert sind, über eine der letztgenannten Netzwerkadresse zugeordnete Tunnelverbindung (12) weiterleitet, und dass der Gateway (3) Datenpakete, die an eine Netzwerkadresse aus dem übrigen externen Adressbereich adressiert sind, über das externe Kommunikationsnetz (2) an die externen Kommunikationsvorrichtungen (20) weiterleitet.

5. Verfahren nach einem der Ansprüche 2 bis 4, **dadurch gekennzeichnet, dass** die Tunnelendpunktadresse (120) aus einem dem lokalen Kommunikationsnetz (1) zugeordneten, für lokale Kundencomputer vorgesehenen ersten Unterbereich des externen Adressbereichs oder aus einem dem lokalen Kommunikationsnetz (1) zugeordneten, für entfernte Kundencomputer vorgesehenen zweiten Unterbereich des externen Adressbereichs gewählt wird, abhängig davon, ob der Computer (10, 10') sich mit dem lokalen Kommunikationsnetz (1) oder über einen externen Zugriffspunkt (22) mit dem externen Kommunikationsnetz (2) verbindet.

6. Verfahren nach einem der Ansprüche 1 bis 5, **dadurch gekennzeichnet, dass** der Computer (10) vor dem Erstellen der Tunnelverbindung (12) authentifiziert wird.

7. Verfahren nach einem der Ansprüche 1 bis 6, **dadurch gekennzeichnet, dass** der Gateway (3) das lokale Kommunikationsnetz (1) über eine Teilnehmerleitung (35) mit dem externen Kommunikationsnetz (2) verbindet.

8. Computersystem für den Datenaustausch zwischen einem kommunikationsfähigen Computer (10) und internen Kommunikationsvorrichtungen (13) in einem lokalen Kommunikationsnetz (1) sowie externen Kommunikationsvorrichtungen (20) in einem externen, ausserhalb des lokalen Kommunikationsnetzes (1) angeordneten Kommunikationsnetz (2) eines Dienstanbieters, umfassend:
einen Gateway (3) zum Verbinden des lokalen Kommunikationsnetzes (1) mit dem externen Kommunikationsnetz (2),
ein Verbindungsmodul (30), das eingerichtet ist, vom Computer (10) eine Tunnelverbindung (12) über eine dem Computer (10) durch das lokale Kommunikationsnetz (1) zugewiesene Netzwerkadresse zum Gateway (3) zu erstellen, und dem Computer (10) eine Tunnelendpunktadresse (120) zuzuweisen, und
ein Wegleitungsmodul (31) zum Austauschen von Datenpaketen zwischen dem Computer (10) und den internen sowie externen Kommunikationsvorrichtungen durch die Tunnelverbindung (12) und über den Gateway (3), wobei an den Computer (10) gerichtete Datenpakete an die Tunnelendpunktadresse (120) adressiert sind.

9. Computersystem nach Anspruch 8, **gekennzeichnet durch** ein Adresszuweisungsmodul (32, 52), das eingerichtet ist, die Tunnelendpunktadresse (120) aus einem dem externen Kommunikationsnetz (2) zugeordneten externen Adressbereich zu wählen.

10. Computersystem nach Anspruch 9, **dadurch gekennzeichnet, dass** das Adresszuweisungsmodul (32, 52) eingerichtet ist, die Tunnelendpunktadresse (120) aus einem dem lokalen Kommunikationsnetz (1) zugeordneten, für Kundencomputer vorgesehenen Unterbereich des externen Adressbereichs zu wählen.

11. Computersystem nach Anspruch 10, **dadurch gekennzeichnet, dass** das Wegleitungsmodul (31) eingerichtet ist, Datenpakete vom Computer (10), die an eine Netzwerkadresse aus einem dem lokalen Kommunikationsnetz (1) zugeordneten internen Adressbereich adressiert sind, an die internen Kommunikationsvorrichtungen (13) weiterzuleiten, Datenpakete, die an eine Netzwerkadresse aus dem für Kundencomputer vorgesehenen Unterbereich des externen Adressbereichs adressiert sind, über eine der letztgenannten Netzwerkadresse zugeordnete Tunnelverbindung (12) weiterzuleiten, und Datenpakete, die an eine Netzwerkadresse aus dem übrigen externen Adressbereich adressiert sind, über das externe Kommunikationsnetz (2) an die externen Kommunikationsvorrichtungen (20) weiterzuleiten.

12. Computersystem nach einem der Ansprüche 9 bis 11, **dadurch gekennzeichnet, dass** das Adresszuweisungsmodul (32, 52) eingerichtet ist, die Tunnelendpunktadresse (120) aus einem dem lokalen Kommunikationsnetz (1) zugeordneten, für lokale Kundencomputer vorgesehenen ersten Unterbereich des externen Adressbereichs oder aus einem dem lokalen Kommunikationsnetz (1) zugeordneten, für entfernte Kundencomputer vorgesehenen zweiten Unterbereich des externen Adressbereichs zu wählen, abhängig davon, ob der Computer (10) sich mit dem lokalen Kommunikationsnetz (1) oder über einen externen Zugriffspunkt (22) mit dem externen Kommunikationsnetz (2) verbindet.

13. Computersystem nach einem der Ansprüche 8 bis 12, **gekennzeichnet durch** eine Authentifizierungseinheit (33), die eingerichtet ist, den Computer (10) vor dem Erstellen der Tunnelverbindung (12) zu authentifizieren.

14. Computersystem nach einem der Ansprüche 8 bis 12, **gekennzeichnet durch** ein Kommunikationsmodul (34) zum Verbinden des lokalen Kommunikationsnetzes (1) über eine Teilnehmerleitung (35) mit dem externen Kommunikationsnetz (2).

15. Computerprogrammprodukt umfassend: ein computerlesbares Medium mit darin enthaltenen Computerprogrammcodemitteln zur Steuerung eines oder mehrerer Prozessoren eines Computersystems, welches Computersystem mit einem lokalen Kommunikationsnetz (1) und mit einem externen, ausserhalb des lokalen Kommunikationsnetzes angeordneten Kommunikationsnetz (2) eines Dienstanbieters verbindbar ist für den Datenaustausch zwischen einem kommunikationsfähigen Computer (10) und internen Kommunikationsvorrichtungen (13) im lokalen Kommunikationsnetz (1) sowie externen Kommunikationsvorrichtungen (20) im externen Kommunikationsnetz (2), derart,
dass das Computersystem eine Tunnelverbindung (12) vom Computer (10) zum Computersystem erstellt, über eine dem Computer (10) durch das lokale Kommunikationsnetz (1) zugewiesene Netzwerkadresse, und dem Computer (10) eine Tunnelendpunktadresse (120) zuweist, und
dass das Computersystem Datenpakete zwischen dem Computer (10) und den internen sowie externen Kommunikationsvorrichtungen durch die Tunnelverbindung (12) austauscht, wobei an den Computer (10) gerichtete Datenpakete an die Tunnelendpunktadresse (120) adressiert sind.
